Europäisches Patentamt

European Patent Office

Office européen des brevets

(11) Veröffentlichungsnummer: **0 211 834 B1**

# EUROPÄISCHE PATENTSCHRIFT

(45) Veröffentlichungstag der Patentschrift:
**28.12.88**

(51) Int. Cl.⁴: **D 21 B 1/32,** D 21 F 1/70,
B 03 D 1/14, B 01 F 5/04

(21) Anmeldenummer: **85901439.1**

(22) Anmeldetag: **30.03.85**

(86) Internationale Anmeldenummer:
**PCT/EP 85/00138**

(87) Internationale Veröffentlichungsnummer:
**WO 85/04432 (10.10.85** Gazette **85/22)**

(54) **VORRICHTUNG ZUM BELÜFTEN.**

(30) Priorität: 03.04.84 DE 3412431
17.05.84 DE 3418328
13.02.85 DE 3504780

(43) Veröffentlichungstag der Anmeldung:
04.03.87 Patentblatt 87/10

(45) Bekanntmachung des Hinweises auf die Patenterteilung:
28.12.88 Patentblatt 88/52

(84) Benannte Vertragsstaaten:
AT BE CH DE FR GB IT LI LU NL SE

(56) Entgegenhaltungen:
EP-A- 0 037 513
WO-A-80/00423
FR-A- 731 829
FR-A- 1 493 946
FR-A- 2 539 772
US-A- 1 810 131
US-A- 1 839 952

(73) Patentinhaber: **Feldmühle Aktiengesellschaft,
Fritz-Vomfelde-Platz 4, D-4000 Düsseldorf 11 (DE)**
Patentinhaber: **E. et M. Lamort S.A., B.P. 46,
F-51302 Vitry-le-François (FR)**

(72) Erfinder: **BARNSCHEIDT, Wolfgang, Am Alten Schlag 1,
D-4047 Dormagen-Straberg (DE)**
Erfinder: **VON BORRIES, Horst, An der Lunie,
D-4150 Krefeld 29 (DE)**
Erfinder: **RAUTENBACH, Robert, Turmstr. 46,
D-5100 Aachen (DE)**
Erfinder: **SCHIFFERMÜLLER, August, Dörpfeldstr. 5,
D-4006 Erkrath 2 (DE)**
Erfinder: **ZIMMERMANN, Hubert, Turmstr. 46,
D-5100 Aachen (DE)**
Erfinder: **LAMORT, Jean-Pierre, B.P. 46,
F-51302 Vitry-le-François (FR)**

**Beschreibung**

Die Erfindung betrifft eine Vorrichtung zum Belüften von Dispersionen, insbesondere eine Flotationsvorrichtung zum Deinken von Faserstoffsuspensionen, die im wesentlichen aus einer Flotationszelle mit mindestens einem dieser zugeordneten Ringinjektor besteht, der eine Zuführ-, eine Misch- und eine Zugstrecke enthält, durch die sich ein mit den einzelnen Strecken einen ringförmigen Spalt bildendes Mittelstück erstreckt.

Vorrichtungen zum Belüften von Dispersionen sind seit langem Stand der Technik. Sie werden insbesondere als Flotationsvorrichtungen für die Erz- und Kohleaufbereitung eingesetzt, dienen aber ebenso zum Belüften von Wasser und Abwasser, um die darin enthaltenden Fremdstoffe abzuscheiden. Ein besonderes Gebiet betrifft dabei die Wiederaufbereitung von Altpapier, genauer gesagt, Faserstoffsuspensionen aus Altpapier, bei der die färbenden Substanzen, also die Druckerschwärze, durch den Flotationsprozess an Luftblasen angelagert und mit diesen als Schaum abgeführt wird. Da sowohl die Kohleals auch die Erzflotation analog arbeitet, wird die Erfindung nachstehend anhand einer Flotationsvorrichtung zum Deinken von Faserstoffsuspensionen abgehandelt, ohne sie jedoch darauf zu beschränken.

Flotationsvorrichtungen zum Deinken von Faserstoffsuspensionen sind durch die DE-C-2 836 496 und DE-C-2 914 392 bekannt, so dass hierzu keine grösseren Ausführungen gemacht werden müssen. Die Faserstoffsuspension wird bei diesen Aggregaten durch eine Art Venturi-Düse direkt in die Flotationsvorrichtung eingepresst, wobei durch das Passieren der Düse Luft mitgerissen und in der Düse verteilt wird. Sie arbeiten also nach dem Prinzip der Wasserstrahlpumpe, wobei sich eine feine Luftblasenverteilung über den gesamten Querschnitt der Flotationsvorrichtung ergibt. Nachteilig an dem Verfahren ist jedoch, dass die Düsen nur relativ kleine Querschnitte aufweisen können, damit eine einwandfreie Belüftung des gesamten sie passierenden Faserstoffstromes ermöglicht wird. Das bedingt wiederum den Einsatz einer Vielzahl von Düsen, was aus der Sicht der Wartung und der Herstellung der Düsen sowie ihrer Anbringung an der Flotationszelle nicht wünschenswert ist.

Aus der EP-A-0 037 513 ist daher bereits der Vorschlag bekannt, eine Vielzahl von Runddüsen durch eine Flachdüse mit einem bestimmten Verhältnis von Querschnitt zum Umfang zu ersetzen. Dieser Vorschlag führt jedoch insbesondere bei kleinen Flotationszellen zu einer starken Rotation in der Flotationszelle, wodurch sich aufgrund der Zentrifugalkräfte die Luft im Zentrum der Zelle ansammelt, ohne dass sie ihre reinigende Wirkung voll entfalten kann.

Auf der anderen Seite ergaben sich bei dieser Konstruktion aufgrund ihrer geometrischen Ausdehnung und des in der Düse herrschenden Druckes Düsen, die ein erhebliches Gewicht aufwiesen, so dass sie nicht ohne weiteres in Rohrleitungen eingebracht werden konnten. Damit war das Problem, eine Vielzahl von kleinen, runden Injektoren durch einen grossen Injektor zu ersetzen, noch nicht gelöst.

Der vorliegenden Anmeldung liegt daher die Aufgabe zugrunde, einen Injektor zu schaffen, der grosse Flüssigkeitsströme bewältigen kann, trotz seiner Grösse für eine einwandfreie Belüftung des Flüssigkeitsstromes garantiert und bei dem der Flüssigkeitsstrom mit einer solchen Geschwindigkeit austritt, dass auch beim Einbringen dieses Stromes in runde Flotationszellen keine starke rotierende Bewegung entsteht, durch die ein Trennen der Dispersion bzw. Suspension von der Luft erfolgt.

Diese Aufgabe wird gelöst durch eine Vorrichtung zum Belüften von Dispersionen, insbesondere durch eine Flotationsvorrichtung zum Deinken von Faserstoffsuspensionen, die im wesentlichen aus einer Flotationszelle mit mindestens einem dieser zugeordneten Ringinjektor besteht, der eine Zuführ-, eine Misch- und eine Zugstrecke enthält, durch die sich ein mit den einzelnen Strecken einen ringförmigen Spalt bildendes Mittelstück erstreckt, die durch die Kombination folgender Merkmale gekennzeichnet ist.

Das Mittelstück ist über mindestens einen Tragarm in der Zuführstrecke gelagert und bildet mit dem Ausgang der Zuführstrecke einen Ringspalt mit dem Querschnitt Q1. Das Mittelstück ist im Bereich der Mischstrecke in Form einer Stufe abgesetzt. Die Mischstrecke ist gegenüber dem Ausgang der Zuführstrecke in Form einer Stufe erweitert und bildet mit dem abgesetzten Mittelstück den Querschnitt Q2. In die Stufen der Mischstrecke und des Mittelstückes erstrecken sich Luftzuführungen. Der Querschnitt Q3 am Ausgang der Mischstrecke ist grösser als der Querschnitt Q2 am Anfang der Mischstrecke. Der Querschnitt Q4 am Ausgang der Zugstrecke ist grösser als der Querschnitt Q3 am Ende der Mischstrecke.

Durch Einsatz eines Ringinjektors ist es möglich, beliebig grosse Mengen von Faserstoffsuspensionen einer Flotationszelle zuzuführen. Die Lagerung des Mittelstückes des Ringinjektors in seiner Zuführstrecke sorgt dafür, dass bei Erreichen des engsten Querschnittes aufgrund der Querschnittsverjüngung in der Zuführstrecke trotz der Störung durch den Einbau eines oder mehrerer Tragarme für das Mittelstück eine Beruhigung der Strömung der Faserstoffsuspension eintritt.

Im Anschluss an diesen engsten Querschnitt erweitert sich der Querschnitt in Form einer Stufe, und zwar erfolgt die Querschnittsvergrösserung sowohl in Richtung der Vergrösserung des Innendurchmessers der Mischstrecke, d.h. die Mischstrecke weist einen grösseren Innendurchmesser auf als der Ausgang der Zuführstrecke als auch durch Verringerung des Durchmessers des Mittelstückes. In die dadurch gebildeten Stufen erstrecken sich Luftzuführungen, d.h., dass der beim Durchströmen des Ringinjektors gebildete Flüssigkeitsring aus Faserstoffsuspension sowohl von der Aussenseite als auch von der Innenseite belüftet wird. Durch diese kombinierte Innen- und Aussenbelüftung ist es möglich, eine sehr gleichmässige Luftverteilung in der Faserstoffsuspension zu erreichen, wobei die Menge der angesaugten Luft durch die Grösse der Stufe bestimmt werden kann. Da sie ausserdem von der zur Verfügung stehenden Oberfläche abhängig ist, ergibt sich zwangsläufig, dass innen weniger Luft angesaugt wird als aussen, da im Innenring die Oberfläche kleiner ist.

Der Querschnitt Q3 am Ausgang der Mischstrecke ist grösser als der Querschnitt Q2 am Anfang der Mischstrecke. Diese Forderung ist im wesentlichen durch die zwischen Faserstoffsuspension und Mittelstück bzw. Mischstreckenwandung auftretende Reibung bedingt. Durch diese Reibung verringert sich die Geschwindigkeit im Bereich der Mischstrecken, d.h., dass der volle Raum, der für die Luftansaugung genutzt werden könnte, nicht zur Verfügung steht. Um eine exakte Luftdosierung zu erreichen, muss also die Reibung der Flüssigkeit an den Wandungen in Betracht gezogen werden, d.h. der Querschnitt Q3 muss analog der reibungsbedingten Erhöhung der Faserstoffsuspensionsmenge vergrössert werden.

In der Zugstrecke tritt eine weitere Vergrösserung des Querschnitts auf, d.h. der Querschnitt Q4 am Ausgang der Zugstrecke ist grösser als der Querschnitt Q3 am Ende der Mischstrecken. Es ergibt sich dadurch eine Abbremsung der Geschwindigkeit, mit der die Faserstoffsuspension in die Flotationszelle eintritt.

Eine vorteilhafte Ausgestaltung der Erfindung sieht vor, dass der Querschnitt Q0 am Anfang der Zuführstrecke das 3- bis 7fache des Querschnitts Q1 am Ausgang der Zuführstrecke ist. Das Unterschreiten der unteren Grenze führt dabei dazu, dass die Strömung nicht mehr genügend beruhigt ist, wodurch die Beladung mit Luft erheblich beeinträchtigt wird. Oberhalb der 7fachen Vergrösserung des Querschnitts tritt keine Verbesserung der Beruhigungswirkung auf, so dass aus konstruktiven Gründen darauf verzichtet werden soll.

Der Querschnitt Q2 am Anfang der Mischstrecke beträgt das 1,4- bis 2,2fache des Querschnitts Q1. Innerhalb dieses Rahmens kann die gewünschte Luftmenge, die zur Belüftung zur Verfügung steht, frei gewählt werden. Gleichzeitig ergibt sich daraus die Höhe der einzelnen Stufen, wobei diese unter Berücksichtigung der jeweilgen Oberfläche berechnet werden können.

Der Querschnitt Q3 am Ausgang der Mischstrecke beträgt das 1,8- bis 2,2fache des Querschnitts Q1, wobei diese Zahlen abhängig von der zu flotierenden Dispersion sind, d.h., dass sich andere Werte ergeben je nachdem, ob eine Faserstoffsuspension vorliegt, oder ob Feststoffpartikel, wie Erz oder Kohle mit erheblich unterschiedlichem Gewicht flotiert werden wollen. Das Reibungsverhalten dieser Dispersionen ist sehr unterschiedlich. Damit ergibt sich auch ein relativ weiter Bereich, in dem sich diese Querschnittsänderung vollzieht.

Der Querschnitt Q4 am Ausgang der Zugstrecke beträgt das 3- bis 5fache des Querschnitts Q1. Ein Überschreiten dieser Grenzen führt auf der einen Seite dazu, dass die Faserstoffsuspension mit zu hoher Geschwindigkeit in die Flotationszelle eintritt, auf der anderen Seite dazu, dass aufgrund eines zu grossen Winkels Ablöseerscheinungen von den Wandungen auftreten, sich die laminare Strömung also in eine turbulente verwandelt, der Injektor damit nicht mehr kontrollierbar arbeitet.

Die Länge der Mischstrecke beträgt gemäss einer vorteilhaften Ausgestaltung der Erfindung das 4- bis 10fache der doppelten Ringspaltbreite im Bereich der Stufen der Mischstrecke. Das Optimum liegt ungefähr bei dem 6fachen der doppelten Ringspaltbreite, so dass sich bei einem Ringspalt von ca. 8 mm eine Länge von ungefähr 100 mm ergibt. In diesem Bereich erfolgt eine intensive Durchmischung der Faserstoffsuspension mit Luft, wobei die Luft in feinster Blasenform in der Faserstoffsuspension verteilt wird.

Um auch bei grossen durchzusetzenden Dispersionsmengen noch eine gute Belüftung der Dispersion zu erreichen, muss der Ringspalt relativ schmal gehalten werden. Dadurch ergeben sich sehr grosse Abmessungen in diesem Bereich, die jedoch nur zur Belüftung erforderlich sind. Durch eine bevorzugte Ausgestaltung der Erfindung ist es möglich, die Baumasse des Ringinjektors austrittsseitig zu verkleinern, da das Mittelstück als sich in Richtung des Düsenausgangs verjüngender Kegelstumpf und die Misch- und die Zugstrecke als sich in Richtung des Düsenausgangs verjüngender Hohlkegelstumpf ausgebildet ist.

Selbstverständlich ist dabei darauf zu achten, dass sich trotzdem der Querschnitt vom Anfang der Mischstrecke bis zum Ende der Zugstrecke entsprechend vergrössert.

Als vorteilhaft hat sich dabei herausgestellt, dass der Kegelwinkel vorzugsweise zwischen 30 und 420 Minuten liegt.

Zweckmässig verlaufen die Wände im Bereich der Mischstrecke parallel, da dadurch der von Injektordüsen bekannte Fangquerschnitt erhalten bleibt.

Die geforderte Vergrösserung des Ausgangsquerschnitts Q3 am Ende der Mischstrecke, bezogen auf den Eingangsquerschnitt Q2 am Anfang der Mischstrecke, lässt sich selbstverständlich auch durch zylindrische Konfiguration von Mischstrecke und/oder Mittelstück lösen. So ist es denkbar, durch eine feine Abstufung schrittweise für eine Vergrösserung zusorgen, wobei die Stufen sowohl den Innendurchmesser der Mischstufe vergrössern als auch den Aussendurchmesser des Mittelstückes verkleinern können, auch ist die Kombination beider Massnahmen denkbar. Die elegantere Lösung ist jedoch die konische Erweiterung der Mischstrecke bzw. die konische Verjüngung des Mittelstückes, wobei auch beide Massnahmen miteinander kombiniert werden können, wenn insgesamt das Verhältnis 1 : 100 nicht wesentlich über- oder unterschritten wird.

Besonders wichtige Ausgestaltungen der Erfindung sehen vor, dass sowohl die Mischstrecke als auch das Mittelstück im Bereich der Stufe eine Ringnut aufweisen. Diese Ringnuten dienen zur Verteilung der zugeführten Luft. Es ist also möglich, für die Aussen- und für die Innenbelüftung nur je eine Luftzuführung vorzusehen, die dann im Bereich der Ringnuten endet. Im Falle der Aussenbelüftung ist die Ringnut ohne Schwierigkeiten sofort zugänglich, im Falle der Innenbelüftung müssen daher besondere Vorkehrungen getroffen werden.

Eine zweckmässige Ausgestaltung der Erfindung sieht vor, einen Belüftungsnippel, der sich mit seinem konischen Kopf in eine Ausfräsung des Mittelstückes im Bereich des Ringkanals erstreckt, anzuordnen. Der konische Kopf des Belüftungsnippels teilt dabei den von der Strömung gebildeten Ring, so dass der Grossteil der Flüssigkeit um diesen konischen Kopf herumfliesst und dadurch der Luft die Möglichkeit eröffnet, im Bereich der Ausfräsung in die Ringnut einzutreten, sich hierin zu verteilen und für die Innenbelüftung zu sorgen. Zwischen dem konischen Kopf und der Ausfräsung bleibt dabei jedoch noch ein Freiraum erhalten, der das Passieren von Faserstoffsuspension ermöglicht. Vor allem soll dieser Freiraum jedoch einer Verstopfungsgefahr vorbeugen, ist also so bemessen, dass sich keine Fasern in diesem Bereich ansammeln können.

Eine bevorzugte Ausgestaltung der Erfindung sieht vor, dass sich in die Ringnuten direkt Luftzufuhrkanäle erstrecken. Die Luftzufuhr erfolgt dabei durch einen oder mehrere Tragarme, wobei die Zuführstrecke gemäss einer zweckmässigen Ausgestaltung der Erfindung unter einem Winkel von 30 bis 90 Grad gegenüber der Mischstrecke angeordnet ist und das Mittelstück im Bereich der Zuführstrecke mit mindestens einer Flosse versehen ist. Durch diesen Aufbau wird die Faserstoffsuspension in der Zuführstrecke umgelenkt und durch die eingebaute Flosse oder die eingebauten Flossen, die sich im Anschluss an die Umlenkung befinden, beruhigt, so dass kein Drall auftreten kann. Das Auftreten eines Dralles würde zum einen die Beladung der Faserstoffsuspension mit Luft stören, zum anderen könnte dadurch das Mittelstück, das aus Einzelteilen zusammengesetzt ist, die miteinander verschraubt sind, gelöst werden.

Eine besonders bevorzugte Ausgestaltung der Erfindung sieht vor, dass das Mittelstück an einem Tragarm gelagert ist, der schwertförmig ausgebildet ist, wobei der Tragarm zweckmässig hohl ausgeführt und im Bereich der Zuführstrecke mit der Aussenluft und im Bereich des Mittelstückes mit den Luftzuführkanälen verbunden ist.

Die Lagerung an einem einzigen Tragarm verhindert, insbesondere wenn dieser schwertförmig ausgebildet ist, das Ansetzen von Fasern, da diese keinen Halt finden und sich so nicht zu Klumpen aufbauen können. Damit ist die Verstopfungsgefahr, wie sie bei Mehrfachlagerungen auftreten kann, beseitigt. Dadurch, dass der Tragarm als Rohr, also hohl ausgeführt ist, ist es möglich, die Luftzufuhr zur Innenbelüftung direkt durch den Tragarm zu leiten, so dass keine weiteren Einbauten am Injektor erforderlich sind.

Der Tragarm ist dabei gemäss einer vorteilhaften Ausgestaltung der Erfindung in einer in der Zuführstrecke angeordneten Einsatzbuchse befestigt. Der konische Kopf des Mittelstückes geht dabei fliessend in den rohrförmigen Tragarm über, der seinerseits mit der Einsatzbuchse verbunden ist. Bei dieser Konstruktion kann es sich um ein Gussteil handeln, es ist aber auch möglich, die einzelnen Teile miteinander zu verschweissen oder zu verlöten. In allen Fällen erfolgt im Anschluss an diese Bearbeitung oder an den Giessvorgang ein Überdrehen der Einsatzbuchse, damit diese im Gleitsitz in eine entsprechende Passung der Zuführstrecke eingesetzt werden kann.

Die Zuführstrecke selbst ist vorteilhafterweise im Bereich des Tragarmfusses mit einem Ringkanal versehen, so dass, gleichgültig in welcher Stellung die Einsatzbuchse mit dem Tragarm und dem konischen Kopf auch in die Zuführstrecke eingesetzt wird, das Ansaugen von Luft möglich ist.

Das Mittelstück als solches besteht bevorzugt aus zwei Teilen, die über eine Schraubverbindung aneinander befestigt sind. Durch Lösung der Verschraubung, die zweckmässig durch eine Madenschraube gesichert ist, können die Luftkanäle, die im Passstück des Mittelstückes angeordnet sind, einfach gereinigt werden.

In vielen Fällen ist es nicht möglich, die Faserstoffsuspension dem Injektor völlig ruhig zuzuführen. Es tritt relativ häufig noch eine Rotation auf. Diese Rotation führt jedoch dazu, dass die Luftzufuhr im Innen- und im Aussenbereich gestört wird. Dadurch wird die Luftbeladung der Faserstoffsuspension in gewissen Bereichen unkontrollierbar. Die Druckverteilung der Luft im Aussen- und im Innenbereich ändert sich, d.h., dass auch die zugeführte Luftmenge sich verändert. Um die Rotation der Faserstoffsuspension zu verhindern und des weiteren einen Druckausgleich zwischen Aussen- und Innenbelüftung zu schaffen, sieht eine vorteilhafte Ausgestaltung der Erfindung vor, dass das Mittelstück im Bereich der Zuführstrecke mit mindestens einer Flosse versehen ist.

Die Flosse, die gemäss einer sehr zweckmässigen Ausgestaltung der Erfindung mit dem Tragarm des Mittelstückes verschweisst ist, setzt die Unterteilung eines sich um das Mittelstück bildenden Ringes durch den Tragarm fort, so dass eine Beruhigung in der Strömung eintritt und die Rotation sicher verhindert wird.

Eine bevorzugte Ausgestaltung der Erfindung sieht dabei vor, dass sich die Flosse bis an die Stufe, an der die Luftzufuhr zur Faserstoffsuspension erfolgt, erstreckt, so dass der sich bildende Ring aus Faserstoffsuspension bis in den Bereich des Lufteintrittes geöffnet ist. Damit ergibt sich in diesem Bereich ein Raum, in dem die Innen- und die Aussenluft miteinander in Verbindung treten und so den Druckausgleich herstellen kann, wodurch gewährleistet ist, dass sowohl der Innen- als auch der Aussenring der Faserstoffsuspension mit gleichem Luftdruck beaufschlagt wird.

Die Erfindung wird nachstehend anhand der Zeichnungen beschrieben:

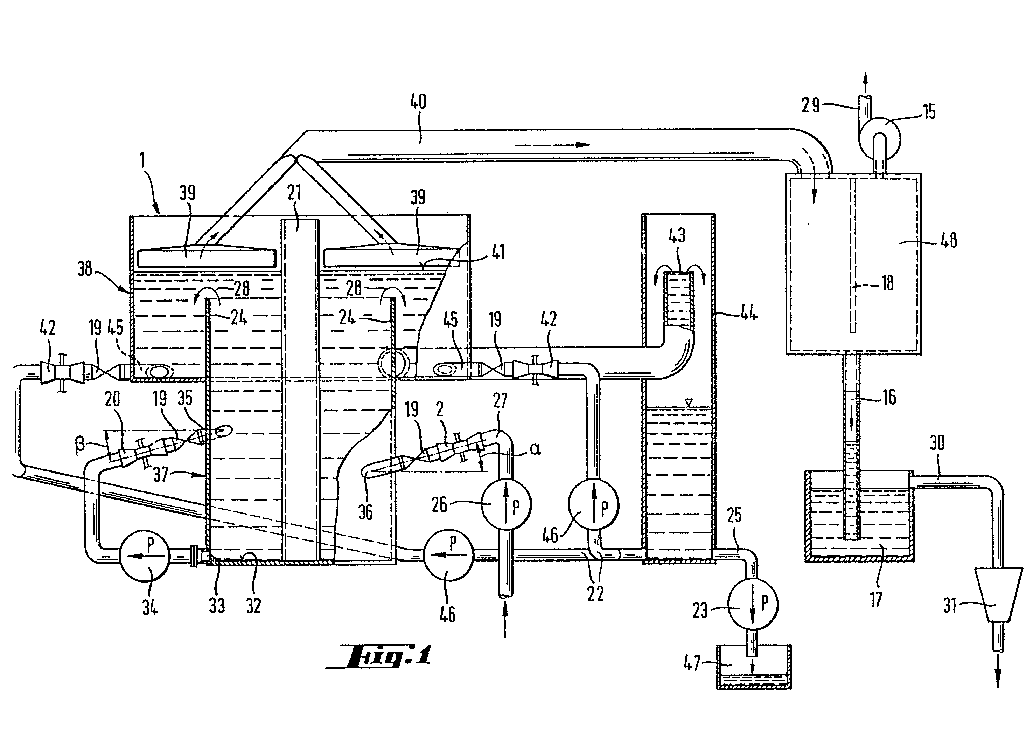

Fig. 1 zeigt schematisch den Schnitt durch eine Flotationszelle,

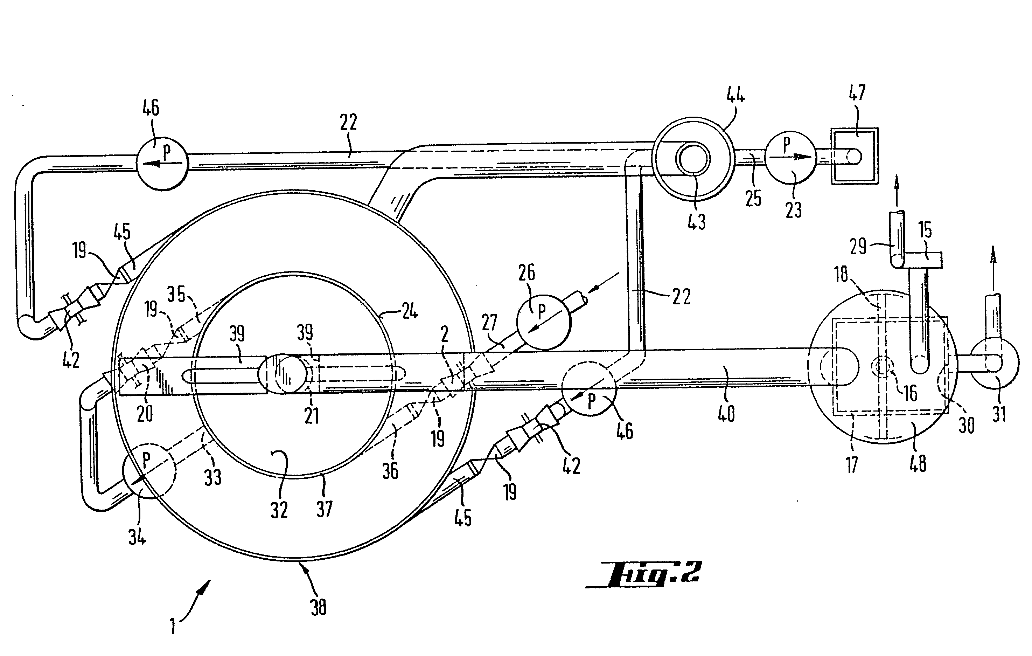

Fig. 2 die Draufsicht auf das gleiche Aggregat,

Fig. 3 eine Ausführungsform eines Ringinjektors im Schnitt,

Fig. 4 und 5 je eine weitere Ausführungsform eines Ringinjektors,

Fig. 6 bis 8 Details des Ringinjektors gemäss Fig. 5.

Über die Pumpe 26 wird Faserstoffsuspension, die bereits chemisch und physikalisch aufgeschlossene Altpapierpulpe ist, als Primärstrom der Zuleitung 27 zugeführt, die die Pumpe 26 mit dem Anschluss 36, der den Ringinjektor 2 trägt, verbindet. Der Anschluss 36 und damit der Ringinjektor 2 ist um einen Winkel von 15 Grad gegenüber der Horizontalen nach unten geneigt und ca. 500 mm oberhalb des Bodenbereiches 32 der Flotationszelle 1 angeordnet. Die Faserstoffsuspension wird durch den Ringinjektor 2 belüftet und steigt mit den sich bildenden Blasen im zylindrischen Behälter 37, dessen Zentrum die Hohlsäule 21 bildet, nach oben, wo sie in Richtung der Pfeile 28 über das von dem zylindrischen Behälter 37 gebildete Wehr 24 tritt und in die Ringzellen 38 gelangt. Nach Auffüllen der Ringzelle 38 steigt die Faserstoffsuspension auf ein Niveau 41, das durch die Höhe des Überlaufs 43, der die Ringzelle 38 mit dem Überlaufsammler 44 verbindet, gegeben ist.

Eine im Bodenbereich 32 angeschlossene Kreislaufpumpe 34 zieht unterhalb des Anschlusses 36 für den Primärstrom Faserstoffsuspension durch den Absaugstutzen 33 ab und führt diese Menge nach Belüftung durch Kreislaufinjektoren 20, die mit dem Sekundärstutzen 35 verflanscht sind, dem zylindrischen Behälter 37 wieder zu. Die Sekundärstutzen 35 sind dabei unter einem Winkel von 15 Grad nach oben gerichtet.

Dieser Sekundärstrom der Faserstoffsuspension sondert ebenso wie der Primärstrom der Faserstoffsuspension Luftblasen ab, die nach oben steigen und an die sich Schmutzpartikel anlagern. Diese Schmutzpartikel bilden zusammen mit den Luftblasen eine Schaumschicht, die sich oberhalb des Wehres 24 aufbaut und durch Saugdüsen 39, die an einer Saugleitung 40 angeordnet sind, abgesaugt wird. Die Saugleitung 40 endet in einem Abscheider 48, in dem durch einen Ventilator 15 ein Vakuum erzeugt wird. Die Abluft verlässt über den Abluftstutzen 29 den Abscheider 48, der abgesaugte Schaum bricht zusammen und schlägt sich im unteren Bereich des Abscheiders 48 nieder, bevor er über das Fallrohr 16 in den Schmutzsammler 17 gelangt. Dadurch passiert kein Schaum das Umleitblech 18, so dass nur von Schaum befreite Abluft den Ventilator 15 erreicht.

Der Schmutzsammler 17 ist über einen Überlauf 30 mit einer Eindickstation 31 verbunden, dabei handelt es sich meist um eine Kombination von Zentrifuge und Filter.

Aus dem Überlaufsammler 44 wird durch eine an die Gutstoffleitung 22 angeschlossene Gegenstrompumpe 46 Gutstoff aus der Ringzelle 38 abgezogen, über Gegenstrominjektoren 42 erneut belüftet und über einen Stutzen 45 wieder der Ringzelle 38 zugeführt. Die Gegenstrominjektoren 42 sind dabei tangential zur Ringzelle 38 angeordnet, so dass in der Ringzelle 38 eine gewisse rotierende Bewegung entsteht, die den sich auf der Oberfläche ansammelnden Schaum kontinuierlich zu den Saugdüsen 39 treibt.

Der ebenfalls an dem Überlaufsammler 44 angreifende Gutstoffabzug 25 ist mit der Gutstoffpumpe 23 verbunden, die den Gutstoff in die Bütte 47 transportiert, von wo er zu der nicht dargestellten Papiermaschine gefördert wird.

Die Ringinjektoren 2 sind ebenso wie die Gegenstrominjektoren 42 und die Kreislaufinjektoren 20 durch Absperrventile 19 von der Ringzelle 38 und den jeweiligen Zuleitungen getrennt. Das Einschliessen der Injektoren 2, 20, 42 zwischen Absperrventile 19 ermöglicht ohne Entleerung des zylindrischen Behälters 37 eine Inspektion bzw. Reinigung der Injektoren 2, 20, 42.

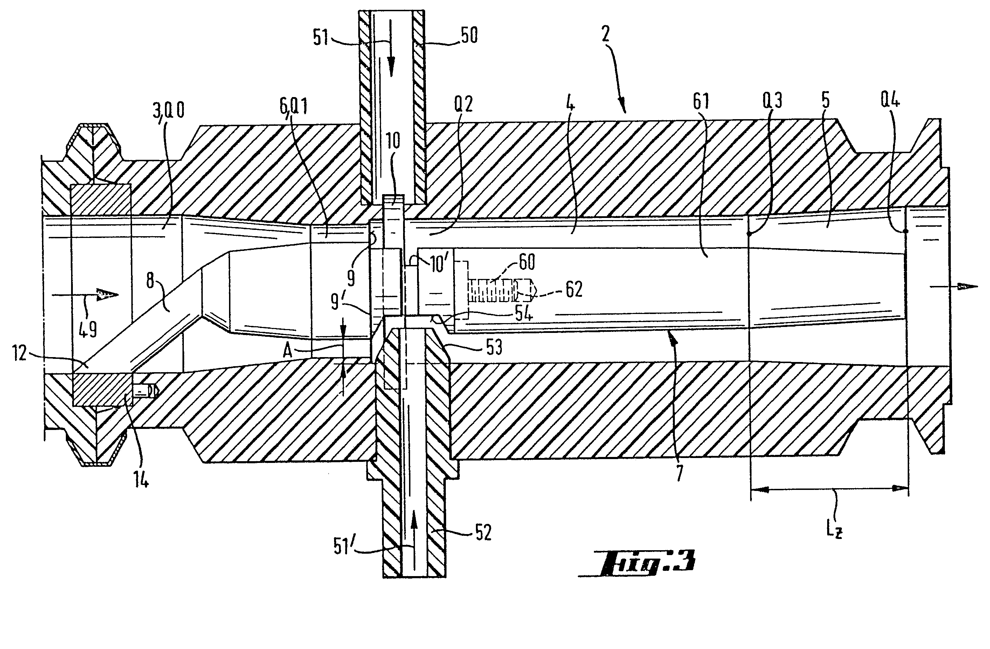

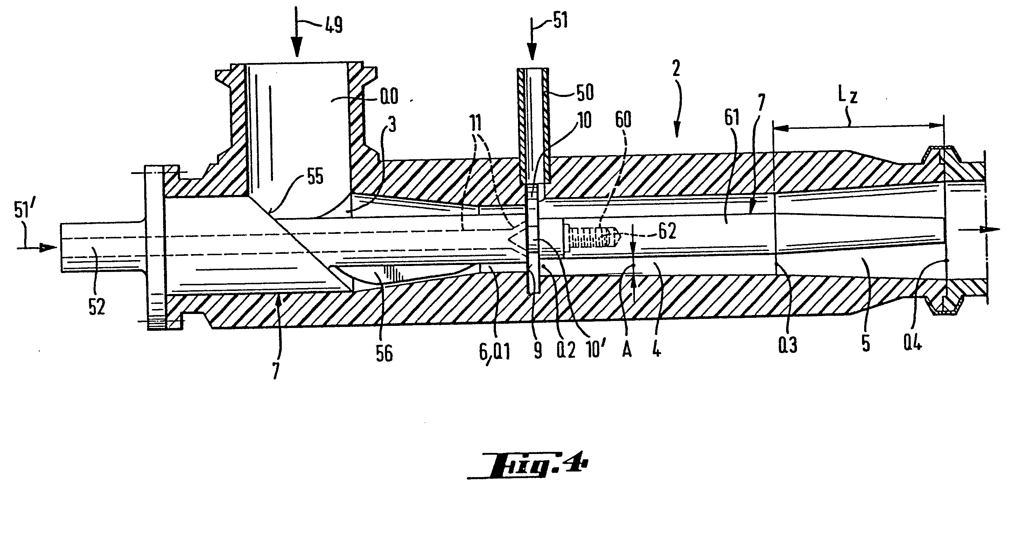

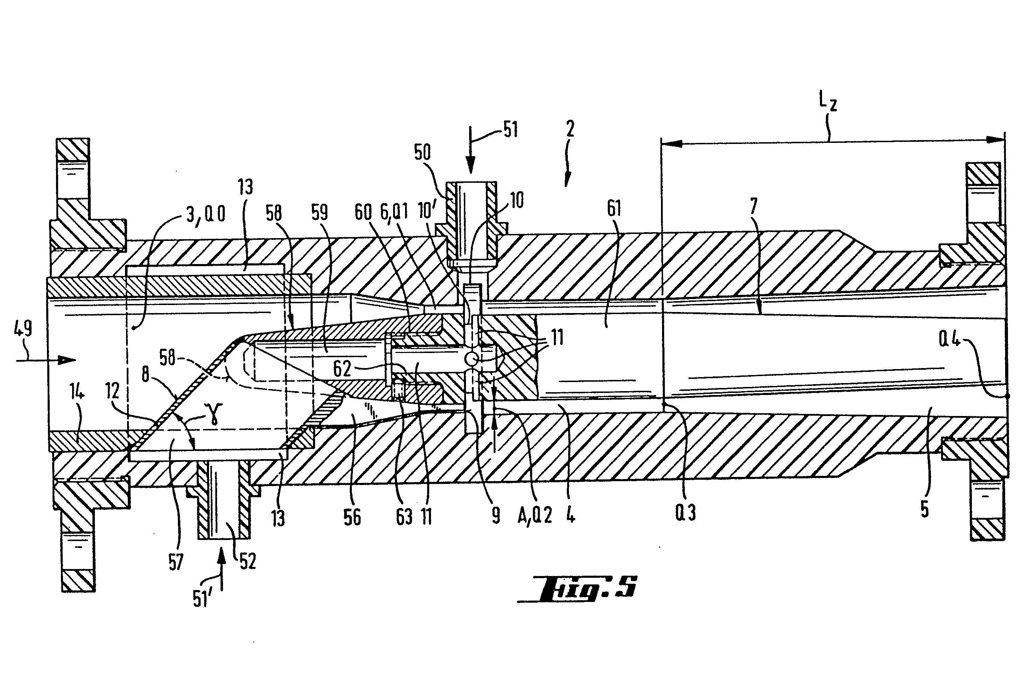

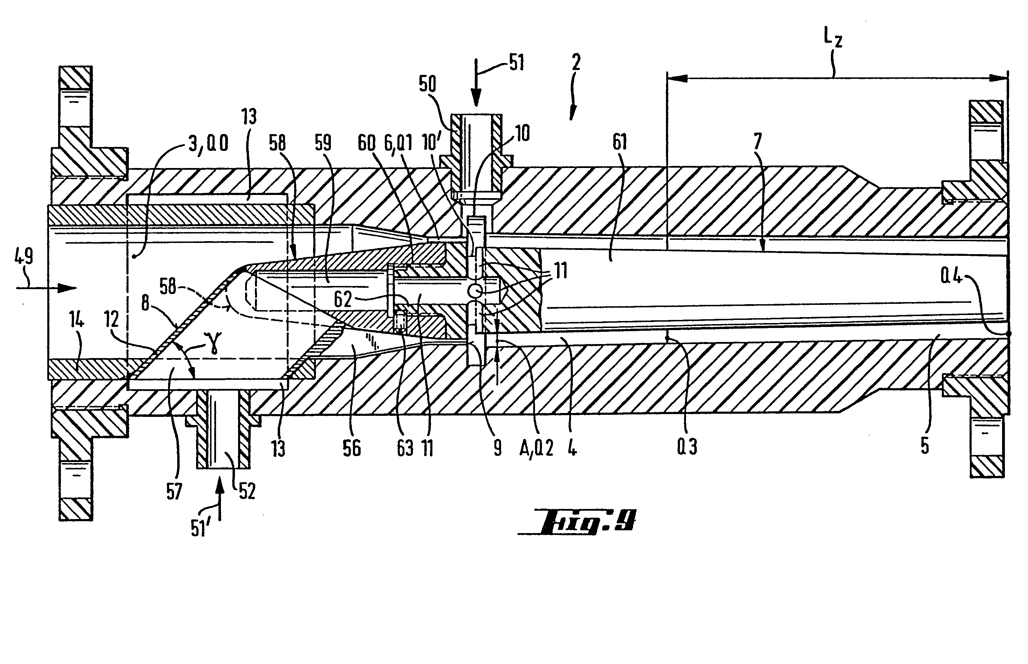

In den Figuren 3 und 5 ist ein Ringinjektor 2 dargestellt, bei dem die Dispersion, wie der Pfeil 49 anzeigt, parallel zum Mittelstück 7 in den Ringinjektor 2 eintritt. Der Ringinjektor 2 besteht aus der in den Zeichnungen 3, 4 und 5 auf der linken Seite dargestellten Zuführstrecke 3, deren Querschnitt Q0 sich konisch verjüngt und an ihrem Ausgang mit dem Mittelstück 7 einen Ringspalt 6 bildet. Dieser Ringspalt 6 weist den Querschnitt Q1 auf, was der kleinste Querschnitt des Ringinjektors 2 ist, also die Düse, an der der Unterdruck für das Einsaugen von Luft gebildet wird.

Im Anschluss an den Ringspalt 6 ist die Mischstrecke 4 angeordnet, die gegenüber dem Ringspalt 6 eine Stufe 9 bildet, wodurch der Querschnitt in diesem Bereich schlagartig vergrössert wird. Im Bereich dieser Stufe 9 ist in der Mischstrecke 4 eine Ringnut 10 angeordnet, die mit einem Rohrstutzen 50 in Verbindung steht. Dieser Rohrstutzen 50 ist über einen nicht dargestellten Schlauch, der im Normalfall über die Höhe der Flotationszelle hinausgeführt wird, mit der Atmosphäre verbunden, so dass bei Beaufschlagung des Ringinjektors 2 mit einer Faserstoffsuspension durch den Rohrstutzen 50 in Richtung des Pfeiles 51 Luft angesaugt wird. Diese Luft verteilt sich über den Ringkanal 10 und verbindet sich zumindest im äusseren Bereich der Mischstrecke 4 mit der darin befindlichen Faserstoffsuspension. Damit ist der von der Faserstoffsuspension gebildete Flüssigkeitsring von der Aussenseite her belüftet.

Zur Belüftung der Innenfläche des Faserstoffsuspensionsringes ist gemäss Figur 3 in die Mischstrecke 4 ein Belüftungsnippel 52 eingebracht, der sich mit seinem konischen Kopf 53 in die Mischstrecke 4 hineinerstreckt und um einen geringen Betrag in die Ausfräsung 54 des Mittelstückes 7 hinter der Stufe 9' eingreift. Die durch die Zuführstrecke 3 eintretende Faserstoffsuspension trifft nach Passieren des Ringspaltes 6 auf den konischen Kopf 53, wobei das aufgrund der Stufen 9, 9' entstehende Vakuum Luft in Richtung der Pfeile 51, 51' fliessen lässt, die sich mit der Faserstoffsuspension vermischt. Die Vermischung im Innenbereich des Faserstoffsuspensionsringes erfolgt dabei dadurch, dass die durch den Belüftungsnippel 52 angesaugte, in Richtung des Pfeiles 51' fliessende Luft zunächst auf die Ausfräsung 54 trifft und sich durch die in die Ausfräsung 54 mündende Ringnut 10' ringförmig um das Mittelstück 7 verteilt.

Das Mittelstück 7 verjüngt sich, wie in Figur 3 dargestellt, im Bereich der Mischstrecke, so dass sich der Querschnitt Q2 in Richtung des Ausgangs der Mischstrecke 4 (Q3) vergrössert. Diese Vergrösserung ist erforderlich, weil aufgrund der Wandreibung sich die Geschwindigkeit der Faserstoffsuspension im Bereich der Mischstrecke verringert, wodurch sich in diesem Bereich mehr Faserstoffsuspension ansammelt und damit die Luftzufuhr behindert wird. Die Volumenvergrösserung dient also als Ausgleich dafür, dass durch den Geschwindigkeitsverlust, sich — bezogen auf den Anfang der Mischstrecke — am Ende der Mischstrecke eine grössere Menge Faserstoffsuspension befindet.

Die Einsatzbuchse 14, deren lichte Weite dem Innendurchmesser der Zuführstrecke 3 entspricht, ist mittels einer Gleitsitzpassung in diese eingebracht. Ein Ringkanal 13, der im Bereich des Belüftungsnippels 52 im Inneren der Zuführstrecke 3 angeordnet ist, garantiert, dass die Aussenluft stets Zutritt — durch Verteilung im Ringkanal 13 — zum Inneren des Tragarmes 8 hat.

Das Mittelstück 7 ist bei dieser Konstruktion zweiteilig ausgeführt. Dabei weist der abgerundete Kegelstumpf 58 eine Gewindebohrung 60 auf, in die das die Luftzufuhrkanäle 11 aufnehmende Passstück 61 mit einem Gewindezapfen 62 eingreift. Eine Madenschraube 63 im abgerundeten Kegelstumpf 58 verhindert ein unbeabsichtigtes Lösen des Passstückes.

In der Zugstrecke 5 weist das Mittelstück 7 eine stärkere konische Verjüngung auf. Gleichzeitig erweitert sich die Zugstrecke 5 in Richtung auf ihren Ausgang, so dass der Querschnitt Q4 das 4fache des Querschnittes Q1 beträgt. Die Länge der Zugstrecke $L_z$ steht mit der Verjüngung des Kegels des Mittelstückes 7 und der konischen Erweiterung der Zugstrecke 5 in engem Zusammenhang. So ist bei einer Länge $L_z$ von 40 mm eine Verjüngung von 1 : 20 möglich, bei einer Länge von 200 mm ergibt sich eine Verjüngung von 1 : 50.

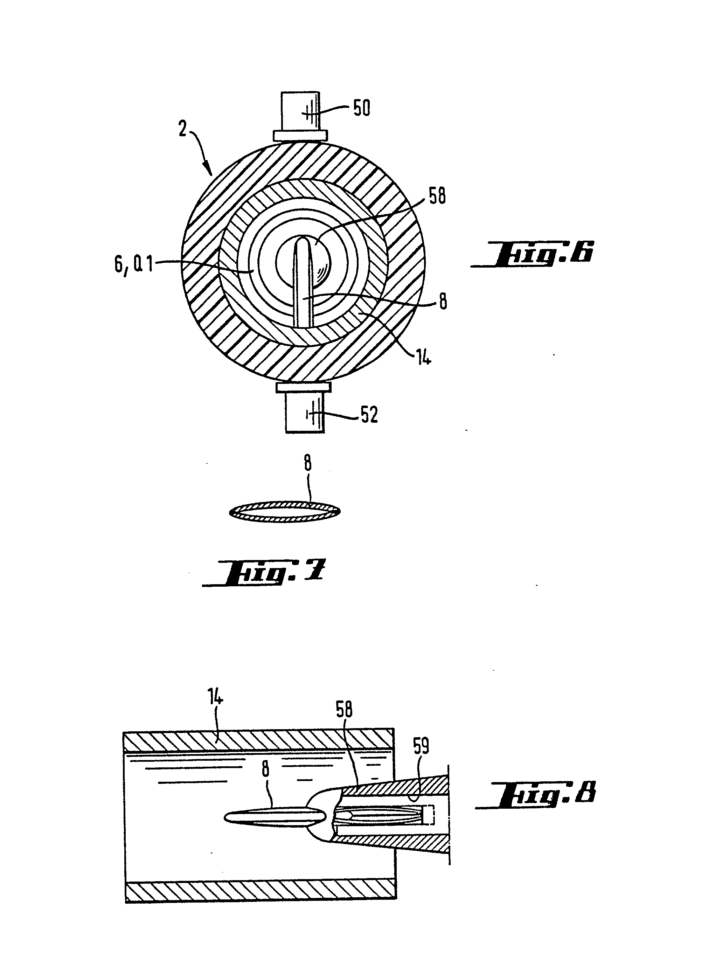

Figur 4 unterscheidet sich insofern von der vorher abgehandelten Figur 3, als hier die Faserstoffsuspension senkrecht zum Mittelstück 7 des Ringinjektors 2 zugeführt wird. Sie trifft dabei auf ein unter einem Winkel von 45 Grad in die Zuführstrecke 3 eingebrachtes Umlenkblech 55, das sie rechtwinklig umleitet. Bei der Umlenkung des Faserstoffstrahles kann unter ungünstigen Bedingungen ein Drall entstehen, weshalb entlang des Mittelstückes 7 im Bereich der Zuführstrecke 3 eine Flosse 56 angeordnet ist, die eine Rotation der Faserstoffsuspension im Ringinjektor 2 verhindert.

Die Aussenbelüftung des im Ringspalt 6 gebildeten rohrförmigen Strahles der Faserstoffsuspension erfolgt auch bei dieser Konstruktion durch einen Rohrstutzen 50, der in eine Ringnut 10 in der Mischkammer 4 mündet, wie das auch bei den anderen Konstruktionen der Fall ist. Ebenso weist das Mittelstück 7 in diesem Bereich eine Ringnut 10' auf, die zur Verteilung der Luft für die Innenbelüftung dient. Abweichend von den anderen Konstruktionen wird die Innenluft jedoch von hinten parallel dem Mittelstück 7 zugeführt und verteilt sich durch Luftzufuhrkanäle 11 in der Ringnut 10'. Die Mischstrecke 4 ist dabei so ausgeführt, dass sie sich, ausgehend von dem Ringspalt 6, in Richtung ihres Ausganges konisch erweitert, wo hingegen das Mittelstück 7 in diesem Bereich zylindrisch ausgeformt ist.

Die Figur 5 und ihre Detaildarstellungen, Figuren 6 bis 8, zeigen eine besonders bevorzugte Ausgestaltung der Erfindung. Das Mittelstück 7 ist dabei über einen Tragarm 8 in einer Einsatzbuchse 14 gelagert, die eine Eintrittsöffnung 57 im Bereich des Tragarmfusses 12 aufweist. Der Tragarm 8 ist dabei als Rohr mit schwertförmigem Querschnitt ausgeführt, um der Strömung der Faserstoffsuspension möglichst wenig Widerstand entgegenzusetzen und damit die Anlagerung von Fasern zu verhindern. An ihn und das Mittelstück 7 ist die Flosse 56 angeschweisst, die vom Innenbereich der Zuführstrecke 3 begrenzt wird und sich bis an die Stufe 9 erstreckt. Der Tragarm 8 verläuft, um Faseranlagerungen zu verhindern, unter einem Winkel von 45 Grad und ist mit dem abgerundeten Kegelstumpf 58, der als Anfang des Mittelstückes 7 in die Zuführstrecke 3 hineinragt, verschweisst. Der abgerundete Kegelstumpf 58 weist in seinem Innern eine Bohrung 59 auf, durch die er mit dem Innenraum des Tragarmes 8 und dadurch mit dem Belüftungsnippel 52 auf der Aussenseite des Ringinjektors 2 sowie mit den Luftzufuhrkanälen 11 im Inneren des Mittelstückes 7 in Verbindung steht.

Die Einsatzbuchse 14, deren lichte Weite dem Innendurchmesser der Zuführstrecke 3 entspricht, ist mittels einer Gleitsitzpassung in diese eingebracht. Ein Ringkanal 13, der im Bereich des Belüftungsnippels 52 im Inneren der Zuführstrecke 3 angeordnet ist, garantiert, dass die Aussenluft stets Zutritt — durch Verteilung im Ringkanal 13 — zum Inneren des Tragarmes 8 hat.

Das Mittelstück 7 ist bei dieser Konstruktion zweiteilig ausgeführt. Dabei weist der abgerundete Kegelstumpf 58 eine Gewindebohrung 60 auf, in die das die Luftzufuhrkanäle 11 aufnehmende Passstück 61 mit seinem Gewindezapfen 62 eingreift. Eine Madenschraube 63 im abgerundeten Kegelstumpf 58 verhindert ein unbeabsichtigtes Lösen des Passstückes 61. Figur 9 zeigt einen Ringinjektor 2, bei dem sich sowohl das Mittelstück 7 als auch die Bereiche der Mischstrecke 4 und der Zugstrecke 5 in Richtung des Querschnittes Q4 verjüngen.

Die Faserstoffsuspension tritt in den Ringinjektor 2 über die Zuführstrecke 3 ein und passiert dann den Ringspalt 6. Der Ringspalt 6 weist eine Spaltweite von nur 2 bis 5 mm auf und besitzt, um nicht zu hohe Strömungsgeschwindigkeiten zu erzeugen, einen grossen Durchmesser. Der Ringspalt 6 ist aussen von der Ringnut 10 umgeben, die mit der atmosphärischen Luft in Verbindung steht. Ebenso steht der hohl ausgeführte Tragarm 8, an dem das Mittelstück 7 befestigt ist, mit der atmosphärischen Luft in Verbindung, die, wie die Pfeile 51, 51' zeigen, durch die strömende Faserstoffsuspension angesaugt wird. Das Mittelstück 7 verjüngt sich kontinuierlich vom Bereich der Ringnut 10 bis zum Ausgang des Ringinjektors 2, die äussere Begrenzung der Mischstrecke 4 ebenfalls, wenn auch geringer. Die Zugstrecke 5 ist ebenfalls als Hohlkegel ausgeführt, verläuft jedoch nicht mehr parallel zum Mittelstück 7, sondern divergiert, so dass sich eine Verlangsamung der Strömung ergibt.

**Patentansprüche**

1. Vorrichtung zum Belüften von Dispersionen, insbesondere Flotationsvorrichtung zum Deinken von Faserstoffsuspensionen, die im wesentlichen aus einer Flotationszelle (1) mit mindestens einem dieser zugeordneten Ringinjektor (2) besteht, der eine Zuführ- (3), eine Misch- (4) und eine Zugstrecke (5) enthält, wobei der Mischstrecke (4) eine Luftzuführung zugeordnet ist, gekennzeichnet durch die Kombination folgender Merkmale:

a) durch den Ringinjektor (2) erstreckt sich ein mit den einzelnen Strecken einen ringförmigen Spalt bildendes Mittelstück (7),

b) das Mittelstück (7) ist über mindestens einen Tragarm (8) in der Zuführstrecke (3) gelagert und bildet mit dem Ausgang der Zuführstrecke (3) einen Ringspalt (6) mit dem Querschnitt Q1,

c) das Mittelstück (7) ist im Bereich der Mischstrecke (4) in Form einer Stufe (9') abgesetzt,

d) die Mischstrecke (4) ist gegenüber dem Ausgang der Zuführstrecke (3) in Form einer Stufe (9) erweitert und bildet mit dem abgesetzten Mittelstück (7) den Querschnitt Q2,

e) in die Stufen (9, 9') der Mischstrecke (4) und des Mittelstückes (7) erstrecken sich Luftzuführungen,

f) der Querschnitt Q3 am Ausgang der Mischstrecke (4) ist grösser als der Querschnitt Q2 am Anfang der Mischstrecke (4),

g) der Querschnitt Q4 am Ausgang der Zugstrecke (5) ist grösser als der Querschnitt Q3 am Ende der Mischstrecke (4).

2. Vorrichtung nach Anspruch 1, dadurch gekennzeichnet, dass der Querschnitt Q0 des Anfangs der Zuführstrecke (3) das 3- bis 7fache des Querschnitts Q1 am Ausgang der Zuführstrecke (3), der Querschnitt Q2 am Anfang der Mischstrecke (4) das 1,4- bis 2,2fache des Querschnitts Q1, der Querschnitt Q3 am Ausgang der Mischstrecke (4) das 1,8- bis 2,2fache des Querschnitts Q1 und der Querschnitt Q4 am Ausgang der Zugstrecke (5) das 3,0- bis 5,0fache des Querschnitts Q1 beträgt.

3. Vorrichtung nach einem der Ansprüche 1 oder 2, dadurch gekennzeichnet, dass die Länge der Mischstrecke (4) das 4- bis 10fache der doppelten Ringspaltbreite (A) im Bereich der Stufen (9, 9') der Mischstrecke (4) beträgt.

4. Vorrichtung nach einem der Ansprüche 1 bis 3, dadurch gekennzeichnet, dass das Mittelstück (7) als sich in Richtung des Düsenausgangs verjüngender Kegelstumpf, die Mischstrecke (4) und die Zugstrecke (5) als sich in Richtung des Düsenausgangs verjüngende Hohlkegelstümpfe ausgebildet sind.

5. Vorrichtung nach einem der Ansprüche 1 bis 4, dadurch gekennzeichnet, dass der Kegelwinkel des Kegelstumpfes bzw. Hohlkegelstumpfes zwischen 30 Minuten und 420 Minuten liegt.

6. Vorrichtung nach einem der Ansprüche 1 bis 5, dadurch gekennzeichnet, dass das Mittelstück (7) in Richtung des Ausgangs der Mischstrecke (4) sich leicht konisch verjüngt.

7. Vorrichtung nach einem der Ansprüche 1 bis 6, dadurch gekennzeichnet, dass die Mischstrecke (4) in Richtung ihres Ausgangs sich leicht konisch erweitert.

8. Vorrichtung nach einem der Ansprüche 6 und 7, dadurch gekennzeichnet, dass das Verjüngungs- oder Erweiterungsverhältnis ca. 1 : 100 beträgt.

9. Vorrichtung nach einem der Ansprüche 1 bis 8, dadurch gekennzeichnet, dass die Mischstrecke (4) im Bereich der Stufe eine Ringnut (10) aufweist.

10. Vorrichtung nach einem der Ansprüche 1 bis 9, dadurch gekennzeichnet, dass das Mittelstück (7) im Bereich der Zuführstrecke (3) mit mindestens einer Flosse (56) versehen ist.

11. Vorrichtung nach einem der Ansprüche 1 bis 10, dadurch gekennzeichnet, dass die Flosse (56) sich bis an die Stufe (9) erstreckt.

12. Vorrichtung nach einem der Ansprüche 1 bis 11, dadurch gekennzeichnet, dass die Flosse (56) mit dem Tragarm (8) verschweisst ist.

13. Vorrichtung nach einem der Ansprüche 1 bis 12, dadurch gekennzeichnet, dass das Mittelstück (7) im Bereich der Stufe eine Ringnut (10) aufweist.

14. Vorrichtung nach einem der Ansprüche 1 bis 13, gekennzeichnet durch einen Belüftungsnippel (52), der sich mit seinem konischen Kopf (53) in eine Ausfräsung (54) des Mittelstückes (7) im Bereich der Ringnut (10') erstreckt.

15. Vorrichtung nach einem der Ansprüche 1 bis 14, dadurch gekennzeichnet, dass die Zuführstrecke (3) unter einem Winkel von 30 bis 90 Grad gegenüber der Mischstrecke (4) angeordnet ist und das Mittelstück (7) im Bereich der Zuführstrecke (3) mit mindestens einer Flosse (56) versehen ist.

16. Vorrichtung nach einem der Ansprüche 1 bis 15, dadurch gekennzeichnet, dass sich in die Ringnut (10, 10') Luftzufuhrkanäle (11) erstrecken.

17. Vorrichtung nach einem der Ansprüche 1 bis 16, dadurch gekennzeichnet, dass das Mittelstück (7) an einem Tragarm (8) gelagert ist, der schwertförmig ausgebildet ist.

18. Vorrichtung nach einem der Ansprüche 1 bis 17, dadurch gekennzeichnet, dass der Tragarm (8) hohl ausgeführt ist, im Bereich der Zuführstrecke (3) mit der Aussenluft und im Bereich des Mittelstückes (7) mit den Luftzufuhrkanälen (11) verbunden ist.

19. Vorrichtung nach einem der Ansprüche 1 bis 18, dadurch gekennzeichnet, dass der Tragarm (8) in einer in der Zuführstrecke (3) angeordneten Einsatzbuchse (14) befestigt ist.

20. Vorrichtung nach einem der Ansprüche 1 bis 19, dadurch gekennzeichnet, dass die Zuführstrecke (3) im Bereich des Tragarmfusses (12) mit einem Ringkanal (13) versehen ist.

21. Vorrichtung nach einem der Ansprüche 1 bis 20, dadurch gekennzeichnet, dass das Mittelstück (7) aus zwei Teilen besteht, die über eine Schraubverbindung aneinander befestigt sind.

**Claims**

1. A device for aerating dispersions, in particular a flotation device for deinking suspensions of fibrous material, which essentially consists of a flotation cell (1) having at least one ring injector (2) assigned thereto which contains a feed section (3), a mixing section (4) and a discharge section (5), wherein the mixing section (4) is assigned an air supply, characterized by the combination of the following features:

a) a middle piece (7) forming an annular gap with the individual sections extends through the ring injector (2),

b) the middle piece (7) is mounted by way of at least one supporting arm (8) in the feed section (3) and with the outlet end of the feed section (3) forms an annular gap (6) of cross-section Q1,

c) the middle piece (7) is reduced in the region of the mixing section (4) in the form of a step (9'),

d) compared with the outlet of the feed section (3), the mixing section (4) is widened in the form of a step (9) and with the reduced middle piece (7) forms the cross-section Q2,

e) air inlets extend into the steps (9, 9') of the mixing section (4) and of the middle piece (7),

f) the cross-section Q3 at the output of the mixing section (4) is greater than the cross-section Q2 at the start of the mixing section (4),

g) the cross-section Q4 at the output of the discharge section (5) is greater than the cross-section Q3 at the end of the mixing section (4).

2. A device according to claim 1, characterized in that the cross-section Q0 of the start of the feed section (3) is 3 to 7 times the cross-section Q1 at the output of the feed section (3), the cross-section Q2 at the start of the mixing section (4) is 1.4 to 2.2 times the cross-section Q1, the cross-section Q3 at the start of the mixing section (4) is 1.8 to 2.2 times the cross-section Q1 and the cross-section Q4 at the output of the discharge section (5) is 3.0 to 5.0 times the cross-section Q1.

3. A device according to one of claims 1 or 2, characterized in that the length of the mixing section (4) is 4 to 10 times twice the annular gap width (A) in the region of the steps (9, 9') of the mixing section (4).

4. A device according to one of claims 1 to 3, characterized in that the middle piece (7) is constructed as a truncated cone tapering in the direction of the nozzle opening, the mixing section (4) and the discharge section (5) are constructed as hollow truncated cones tapering in the direction of the nozzle opening.

5. A device according to one of claims 1 to 4, characterized in that the cone angle — of the truncated cone or hollow truncated cone is between 30 and 420 minutes.

6. A device according to one of claims 1 to 5, characterized in that the middle piece (7) tapers gently and conically in the direction of the output of the mixing section (4).

7. A device according to one of claims 1 to 6, characterized in that the mixing section (4) widens gently and conically in the direction of its output.

8. A device according to one of claims 6 and 7, characterized in that the taper ratio or widening ratio is approximately 1 : 100.

9. A device according to one of claims 1 to 8, characterized in that the mixing section (4) has an annular groove (10) in the region of the step.

10. A device according to one of claims 1 to 9, characterized in that the middle piece (7) is provided in the region of the feed section (3) with at least one fin (56).

11. A device according to one of claims 1 to 10, characterized in that the fin (56) extends as far as the step (9).

12. A device according to one of claims 1 to 11, characterized in that the fin (56) is welded to the supporting arm (8).

13. A device according to one of claims 1 to 12, characterized in that the middle piece (7) has an annular groove (10) in the region of the step.

14. A device according to one of claims 1 to 13, characterized by an aerating nipple (52) which extends with its conical head (53) into a recess (54) of the middle piece (7) in the region of the annular groove (10').

15. A device according to one of claims 1 to 14, characterized in that the feed section (3) is arranged at an angle of from 30 to 90 degrees to the mixing section (4) and in the region of the feed section (3) the middle piece (7) is provided with at least one fin (56).

16. A device according to one of claims 1 to 15, characterized in that air supply channels (11) extend into the annular groove (10, 10').

17. A device according to one of claims 1 to 16, characterized in that the middle piece (7) is mounted on a supporting arm (8) which is of sword-shaped cross-section.

18. A device according to one of claims 1 to 17, characterized in that the supporting arm (8) is of hollow construction and in the region of the feed section (3) is provided with external air and in the region of the middle piece (7) is provided with the air supply channels (11).

19. A device according to one of claims 1 to 18, characterized in that the supporting arm (8) is fastened in an installation socket (14) arranged in the feed section (3).

20. A device according to one of claims 1 to 19, characterized in that the feed section (3) is provided with an annular channel (13) in the region of the base (12) of the supporting arm.

21. A device according to one of claims 1 to 20, characterized in that the middle piece (7) consists of two parts which are fastened to one another by means of a screw connection.

## Revendications

1. Dispositif d'aérage de dispersions, notamment dispositif de flottation pour le désencrage de suspensions de matières fibreuses, constitué, pour l'essentiel, par une cellule de flottation (1) à laquelle est associé au moins un injecteur annulaire (2) comprenant un trajet d'amenée (3), un trajet de mélange (4) et un trajet d'éffluence (5), une amenée d'air étant associée au trajet de mélange (4), caractérisé par la combinaison des caractéristiques suivantes:

a) une pièce centrale (7) s'étend dans l'injecteur annulaire (2) et forme un intervalle annulaire avec les différents trajets;

b) la pièce centrale (7) est supportée dans le trajet d'amenée (3), par l'intermédiaire d'au moins un bras support (8), et forme, avec la sortie du trajet d'amenée (3), un intervalle annulaire (6) de section droite Q1;

c) dans la région du trajet de mélange (4), la pièce centrale (7) présente un épaulement formant un gradin (9');

d) le trajet de mélange (4) présente, par rapport à la sortie du trajet d'amenée (3), un élargissement formant un gradin (9), et forme, avec la pièce centrale épaulée (7), la section droite Q2;

e) des amenées d'air s'étendent dans les épaulements (9, 9') du trajet de mélange (4) et de la pièce centrale (7);

f) la section droite Q3 à la sortie du trajet de mélange (4) est plus grande que la section droite Q2 au début du trajet de mélange (4);

g) la section droite Q4 à la sortie du trajet d'éffluence est plus grande que la section droite Q3 à la fin du trajet de mélange (4).

2. Dispositif selon la revendication 1, caractérisé par le fait que la section droite Q0 du début de trajet d'amenée (3) vaut de 3 à 7 fois la section droite Q1 à la sortie du trajet d'amenée (3), la section droite Q2 au début du trajet de mélange (4) vaut 1,4 à 2,2 fois la section droite Q1, la section droite Q3 à la sortie du trajet de mélange (4) vaut 1,8 à 2,2 fois la section droite Q1, et la section droite Q4 à la sortie du trajet d'éffluence (5) vaut 3,0 à 5,0 fois la section droite Q1.

3. Dispositif selon l'une des revendications 1 ou 2, caractérisé par le fait que la longueur du trajet de mélange (4) vaut 4 à 10 fois la largeur du double intervalle annulaire (A) dans la région des gradins (9, 9') du trajet de mélange (4).

4. Dispositif selon l'une des revendications 1 à 3, caractérisé par le fait que la pièce centrale (7) est réalisée sous la forme d'un tronc de cône s'amincissant vers la sortie de la tuyère, et par le fait que le trajet de mélange (4) et le trajet d'éffluence (5) sont réalisés sous forme de tronc de cône creux s'amincissant vers la sortie de la tuyère.

5. Dispositif selon l'une des revendications 1 à 4, caractérisé par le fait que l'angle de conicité du tronc de cône, ou du tronc de cône creux, est compris entre 30 minutes et 420 minutes.

6. Dispositif selon l'une des revendications 1 à 5, caractérisé par le fait que la pièce centrale (7), s'amincit légèrement de manière conique vers la sortie du trajet de mélange (4).

7. Dispositif selon l'une des revendications 1 à 6, caractérisé par le fait que le trajet de mélange (4) s'élargit légèrement en cône vers sa sortie.

8. Dispositif selon l'une des revendications 6 et 7, caractérisé par le fait que le rapport d'amincissement ou rapport d'élargissement vaut environ 1 : 100.

9. Dispositif selon l'une des revendications 1 à 8, caractérisé par le fait que le trajet de mélange (4) présente une gorge annulaire (10) dans la région du gradin.

10. Dispositif selon l'une des revendications 1 à 9, caractérisé par le fait que la pièce centrale (7) est munie d'au moins un aileron (56) dans la zone du trajet d'amenée (3).

11. Dispositif selon i'une des revendications 1 à 10, caractérisé par le fait que l'aileron (56) sétend jusqu'au gradin (9).

12. Dispositif selon l'une des revendications 1 à 11, caractérisé par le fait que l'aileron (56) est soudé au bras-support (8).

13. Dispositif selon l'une des revendications 1 à 12, caractérisé par le fait que la pièce centrale (7) présente une gorge annulaire (10) dans la région du gradin.

14. Dispositif selon l'une des revendications 1 à 13, caractérisé par un gicleur d'aérage (52) doté d'une tête conique (53) s'étendant dans une fraisure (54) de la pièce centrale (7), dans la région de la gorge annulaire (10').

15. Dispositif selon l'une des revendications 1 à 14, caractérisé par le fait que le trajet d'amenée (3) est disposé sous un angle de 30° à 90° par rapport au trajet de mélange (4), et la pièce centrale (7) est munie d'au moins un aileron (56) dans la région du trajet d'amenée (3).

16. Dispositif selon l'une des revendications 1 à 15, caractérisé par le fait que des canaux d'amenée d'air (11) s'étendent dans la gorge annulaire (10, 10').

17. Dispositif selon l'une des revendications 1 à 16, caractérisé par le fait que la pièce centrale (7) est montée sur un bras-support en forme d'épée (8).

18. Dispositif selon l'une des revendications 1 à 17, caractérisé par le fait que le bras-support (8) est creux et, dans la région du trajet d'amenée (3), est relié à l'air extérieur et, dans la région de la pièce centrale (7), est relié aux canaux d'amenée d'air (11).

19. Dispositif selon l'une des revendications 1 à 18, caractérisé par le fait que le bras-support (8) est fixé dans une douille d'insertion (14) agencée dans le trajet d'amenée (3).

20. Dispositif selon l'une des revendications 1 à 19, caractérisé par le fait que le trajet d'amenée (3) est muni d'un canal annulaire (13), dans la région du pied (12) du bras-support.

21. Dispositif selon l'une des revendications 1 à 20, caractérisé par le fait que la pièce centrale (7) est constituée de deux parties fixées l'une à l'autre par vissage.

Fig.1

EP 0 211 834 B1

Fig. 2

Fig. 3

Fig. 4

**Fig. 5**

50

2

58

6, 0.1

8

14

*Fig:6*

8

8

*Fig:7*

14

58

59

8

*Fig:8*

52

**Fig. 9**

EP 0 211 834 B1